# FASCICULE DE BREVET EUROPEEN

(11) **EP 2 959 488 B1**
(45) Date de publication et mention de la délivrance du brevet: **19.04.2017**
(21) Numéro de dépôt: 14705339.1
(22) Date de dépôt: 18.02.2014
(51) Int. Cl.: G21D 1/00, B08B 7/00, B08B 9/04, G21F 9/00, G21F 9/28, F22B 37/00

(54) **PROCEDE DE DECONTAMINATION DE TUBES DE GENERATEUR DE VAPEUR**
VERFAHREN ZUR DEKONTAMINIERUNG VON DAMPFERZEUGERROHREN
METHOD FOR DECONTAMINATING STEAM GENERATOR TUBES

(30) Priorité: 21.02.2013 FR 1351523
(43) Date de publication de la demande: 30.12.2015
(73) Titulaire: Agence Nationale pour la Gestion des Déchets Radioactifs, 92298 Châtenay-Malabry (FR)
(72) Inventeur: DUTZER, Michel, F-91330 Yerres (FR)
(74) Mandataire: Brevalex
(86) Numéro de dépôt international: PCT/EP2014/053106
(87) Numéro de publication internationale: WO 2014/128114

(56) Documents cités:
- EP-A1- 0 762 947
- DE-A1- 19 541 501
- FR-A1- 2 395 461
- FR-A1- 2 666 523

## Description

### DOMAINE TECHNIQUE

L'invention se rapporte au domaine de la décontamination de composants métalliques irradiés afin de les recycler.

La France compte en 2011 plus de cinquante réacteurs nucléaires répartis sur une vingtaine de sites avec une moyenne d'âge des réacteurs qui est proche de 30 ans, pour une durée de vie d'un réacteur de 40 ans voire 50 ans. Chaque tranche comporte généralement 3 à 4 générateurs de vapeur, renouvelés tous les 15 à 20 ans en moyenne, qui assurent le transfert d'énergie thermique entre le circuit primaire chauffé au sein du réacteur et le circuit secondaire, qui alimente les turbines. Il s'agit de pièces très volumineuses (environ 20 m de haut sur 5 m de diamètre) comptant pour plusieurs centaines de tonnes de métal. Leur démantèlement et leur recyclage constituent donc un véritable enjeu pour limiter le volume de déchets à stocker dans des installations dédiées.

Au sein des générateurs de vapeur, l'échange thermique est assuré par plusieurs milliers de tubes très fins (environ 2 cm de diamètre) en forme de U renversé, généralement en alliage de nickel, tel que l'inconel 600 ou 690, au sein desquels circule le fluide caloporteur du circuit primaire. Ces tubes se retrouvent donc contaminés par des éléments radioactifs en face interne.

L'invention concerne donc plus précisément un procédé de décontamination de tubes de générateur de vapeur et une installation permettant une telle décontamination.

### ÉTAT DE LA TECHNIQUE ANTÉRIEURE

Lors du démantèlement des générateurs de vapeur, les tubes les équipant peuvent faire l'objet d'une décontamination partielle visant à réduire leur activité radioactive en vue de faciliter les opérations de manutention et leur prise en charge en stockage. Les procédés de décontamination de tubes de générateur de vapeur font généralement appel, comme cela est décrit dans le document US5046289, à des mélanges de produits abrasifs afin d'obtenir une abrasion de la surface interne des tuyaux de générateur vapeur.

Ces procédés, afin de supprimer, au moins partiellement, une partie de la surface interne contaminée des tubes à décontaminer, consistent généralement à faire passer le liquide sous pression dans les tubes à décontaminer afin de venir ablater chimiquement ou mécaniquement la surface des tubes.

Néanmoins, ces procédés ne permettent qu'une décontamination de la surface interne des tubes de générateur de vapeur partielle, en particulier pour les tubes en alliage dur comme les alliages de nickel. De plus, certains de ces procédés peuvent générer des quantités conséquentes de déchets radioactifs supplémentaires qu'il faut traiter. De plus, lors de la décontamination des tubes, en fonction de la géométrie de ces derniers, il existe une problématique vis-à-vis des risques de re-dépôt et d'accumulation de déchets à certains emplacements des tubes.

Pour pallier ces inconvénients, il a été développé des dispositifs de décontamination laser, tels que ceux décrits dans le brevet FR2666523, adaptés pour effectuer une ablation laser de la surface interne des tubes de générateur de vapeur.

De tels dispositifs comportent :
- un laser extérieur au tube à décontaminer,
- une fibre optique adaptée pour conduire le rayonnement issu de la source laser,
- un amplificateur relié à la fibre optique et adapté pour recevoir le rayonnement laser pour l'amplifier, et
- un miroir adapté pour dévier le rayonnement issu de l'amplificateur laser en direction de la surface interne du tube.

Lors de la décontamination d'un tube de générateur de vapeur, un tel dispositif est disposé au niveau de l'entrée d'un tube, l'ensemble composé de la fibre optique, l'amplificateur et le miroir étant installés à l'intérieur du tube. En fonctionnement, le rayonnement laser, dont la puissance est suffisamment faible pour autoriser son transport par l'intermédiaire de la fibre optique, est transmis à l'amplificateur. Ce même rayonnement est ensuite suffisamment amplifié pour permettre une ablation d'une partie de la surface interne. Le miroir guide ensuite ce dernier rayonnement amplifié en direction de la partie de la surface interne à ablater de manière à supprimer une partie de l'épaisseur qui est contaminée de cette dernière surface.

Un tel dispositif permet donc d'obtenir une bonne décontamination de la surface interne d'un tube de générateur de vapeur ceci alors que ce dernier est en place dans le générateur vapeur. Il démontre également la faisabilité d'une décontamination laser de la surface interne d'un tube de générateur vapeur. Néanmoins, un procédé de décontamination laser utilisant un tel dispositif n'est pas réellement adapté aux contraintes du démantèlement d'un réacteur. En effet, le dispositif mis en oeuvre n'est pas compatible, en raison des faibles possibilités de miniaturisation du système d'amplificateur et de miroir, avec les tubes de diamètres inférieurs à 10 cm. Or, la majorité des tubes de générateur de vapeur présente un diamètre inférieur à 5 cm. On peut également noter qu'avec un tel dispositif il est forcément nécessaire d'introduire une source laser, ici l'amplificateur laser, dans le tube à décontaminer et qu'une partie des déchets d'ablation se dépose sur ladite source occasionnant alors une contamination de cette dernière. De même, un tel procédé est également sujet à la problématique, en fonction de la géométrie des tubes décontaminés, d'accumulation de déchets à certains emplacements des tubes.

### EXPOSÉ DE L'INVENTION

L'invention a pour but de remédier à cet inconvénient.

Plus précisément, le but de l'invention est de fournir un procédé de décontamination laser suffisamment robuste qui puisse être mis en oeuvre sur des tubes de générateur de vapeur dont le diamètre est inférieur à 5 cm.

Un autre but est de fournir un procédé de décontamination laser qui peut être mis en oeuvre sans contamination de la source laser par les déchets d'ablation.

A cet effet, l'invention concerne un procédé de décontamination de tubes de générateur de vapeur de centrale nucléaire comprenant les étapes suivantes de :
- découpage des tubes à décontaminer en tronçons de tube,
- ablation laser de la surface interne d'au moins certains tronçons de tube sur une épaisseur suffisante pour éliminer la partie de chacun de ces tronçons qui est contaminée.

Avec un tel découpage préalable des tubes en tronçons, il est possible d'effectuer une ablation laser de la partie de la surface interne qui est contaminée, ceux-ci avec un système d'émission du rayonnement laser qui est extérieur au tube, limitant ainsi les problèmes de contamination de la source laser. De plus, le découpage des tubes en tronçons offre la possibilité, soit en sélectionnant les tronçons, soit en réduisant la déviation angulaire à la seule qui est présente sur la longueur d'un seul tronçon, de s'affranchir des problématiques de diamètre du tube et de leur courbure, et d'ablater la surface interne avec un rayonnement laser émis à l'extérieur du tronçon. On peut également noter que lors de l'étape d'ablation laser, en limitant la longueur de tube à celle d'un tronçon, on limite la quantité de déchets d'ablation générée pour chacun des tronçons et on réduit ainsi la problématique d'accumulation de déchets d'ablation à un emplacement d'un tube présentée par les procédés de l'art antérieur Lors de l'étape de découpage des tubes en tronçons, les tubes peuvent être découpés en tronçons de taille inférieure à 1m, préférentiellement 50 cm, voire 20 cm. Selon d'autres possibilités de l'invention, les tubes peuvent être découpés en tronçons de taille inférieure à 10 cm voire 5 cm.

Une telle taille permet de particulièrement limiter les effets de courbure des tubes qui peuvent limiter l'efficacité de l'étape d'ablation laser.

On entend par taille des tronçons de tube, que ceux-ci soient droits ou courbes, ceux-ci comportant une ligne directrice selon laquelle ils s'étendent, la distance selon laquelle ils s'étendent selon la ligne directrice.

On entend par ablation laser d'une partie de l'épaisseur de la surface interne, la suppression du tronçon d'une partie de sa surface interne du tube laissant ainsi le tronçon libéré de cette partie de surface interne.

L'étape de découpage des tubes en tronçons de tube peut être réalisée par une opération de sciage telle que celle obtenue par une scie circulaire ou une meuleuse à disque, ou de découpage par jet d'eau, ou de découpage laser.

Il peut être compris entre l'étape de découpage des tubes en tronçons et l'étape d'ablation laser, une étape de redressage des tronçons afin de réduire la courbure de ces derniers.

Une telle étape de redressage des tronçons permet de limiter la courbure des tronçons et donc de réduire l'influence de cette courbure lors de l'étape d'ablation laser. Ainsi, certains tronçons qui, sans cette étape de redressage, ne sont pas compatibles avec l'étape d'ablation laser, peuvent être décontaminés.

Pendant l'étape de découpage des tubes en tronçons, la taille des tronçons peut être modulée en fonction de la courbure de la portion du tube dans laquelle est formé le tronçon.

Chaque tronçon s'étend selon une ligne directrice qui peut être droite ou courbe, la modulation de la taille des tronçons peut être adaptée de manière à ce que la ligne directrice de chaque tronçon présente une déviation angulaire inférieure à 15°, préférentiellement 10°, voire 5°.

Avec de telles possibilités de modulation de la taille des tronçons, la taille des tronçons peut être adaptée pour limiter la déviation angulaire de la ligne directrice et ainsi réduire l'influence de la courbure de certaines portions du tube sur l'efficacité de l'étape d'ablation laser.

Il peut être prévu pendant l'étape d'ablation laser une circulation de fluide dans les tronçons ablatés de manière à emporter les déchets d'ablation.

Une telle circulation de fluide permet d'emporter les déchets d'ablation pendant l'étape d'ablation limitant ainsi les risques de re-contamination de la surface interne des tronçons pendant cette étape de d'ablation laser.

Le fluide peut être un gaz, tel que de l'air ou de l'azote, ou un liquide, tel que de l'eau ou une huile, le fluide étant préférentiellement une solution aqueuse, telle que de l'eau.

Seuls les tronçons de tube sensiblement droit, ou rendu droit peuvent être soumis à l'étape d'ablation laser, lesdits tronçons présentant une direction longitudinale et l'étape d'ablation peut consister à soumettre chaque tronçon à un rayonnement laser sensiblement parallèle à la direction longitudinale dudit tronçon, le rayonnement laser étant déplacé relativement au tronçon de manière à parcourir toute les génératrices internes du tronçon.

Une telle étape d'ablation laser est particulièrement simple et robuste. Elle permet d'obtenir, dans le cas où seuls les tronçons droit sont traités, une décontamination d'une partie importante des tubes d'un générateur vapeur à coût réduit par rapport à un procédé nécessairement plus complexe adapté pour décontaminer la totalité des tubes. De plus, avec une simple étape préalable de redressage des tronçons, il est envisageable de traiter la totalité des tubes d'un générateur vapeur.

Pendant l'étape d'ablation laser, le fluide peut être envoyé sous pression dans les tronçons à ablater sous la forme d'un jet de fluide et, pendant cette même étape, le rayonnement laser peut être guidé par ledit jet de fluide.

Chaque tronçon s'étendant selon une ligne directrice, l'étape d'ablation peut consister à soumettre chaque tronçon au jet de fluide selon une direction sensiblement tangente à la ligne directrice au niveau de l'entrée du tronçon par laquelle est injecté le fluide, le jet de fluide étant déplacé relativement au tronçon de manière à parcourir toute les génératrices internes du tronçon.

Un tel jet de fluide permet de guider le laser avec une trajectoire qui n'est pas forcément droite et permet donc d'envisager le traitement de tronçon de tube présentant une courbure de surface. Ainsi, avec des tronçons de taille adaptée, il est envisageable de traiter l'ensemble des tubes présents dans un générateur vapeur ceci quels que soient leur diamètre et leur courbure.

L'étape d'ablation peut être réalisée au moyen d'un laser extérieur aux tronçons et il peut en outre être prévu un système de déviation du rayonnement laser adapté pour dévier le rayonnement laser issu directement du laser en direction de la surface interne de chaque tronçon de manière à balayer cette dernière.

Avec une telle étape d'ablation laser, il est possible de traiter des tronçons de tube présentant une courbure relativement importante.

L'étape d'ablation peut être réalisée au moyen d'au moins deux rayonnements lasers.

L'invention concerne également une installation de décontamination de tubes de générateur de vapeur comportant :
- un dispositif de découpage de tube adapté pour découper les tubes de générateur de vapeur,
- un dispositif de décontamination laser adapté pour ablater la surface interne de tronçons de tube sur une épaisseur suffisante pour éliminer la partie de chaque tronçon qui est contaminée.

Une telle installation permet la décontamination d'une partie majoritaire des tubes d'un générateur de vapeur, ceci sans réelle limitation concernant le diamètre des tubes à décontaminer.

L'épaisseur suffisante peut être supérieure à 10 µm, voire 20 µm ou encore 50 µm et préférentiellement 150 µm, cette même épaisseur suffisante étant préférentiellement inférieure à 400 µm.

L'étape d'ablation peut être réalisée au moyen d'au moins deux rayonnements lasers.

L'invention concerne également un dispositif de décontamination laser comportant :
- un laser extérieur,
- un dispositif de déviation laser adapté pour dévier le rayonnement vers la surface interne d'un tronçon à décontaminer.

Un tel dispositif permet la décontamination d'un tronçon de tube sans réelle limitation quand au diamètre du tube et ceci même si le tronçon présente une déviation angulaire raisonnable.

Il peut en outre être prévu un système de circulation de fluide adapté pour faire circuler du fluide dans un tronçon de tube.

Un tel fluide permet d'éviter une re-contamination de la surface interne du tube pendant que cette dernière est décontaminée par le dispositif de décontamination laser.

Le système de circulation peut être adapté pour former un jet de fluide sous pression, ledit jet étant agencé pour guider et dévier le rayonnement laser vers la surface de manière à ce que ce dernier longe cette même surface.

### BRÈVE DESCRIPTION DES DESSINS

La présente invention sera mieux comprise à la lecture de la description d'exemples de réalisation, donnés à titre purement indicatif et nullement limitatif, en faisant référence aux dessins annexés sur lesquels :
- la figure 1 illustre une étape d'ablation laser d'un tronçon d'un tube de générateur laser selon un premier mode de réalisation de l'invention,
- la figure 2 illustre une étape d'ablation laser d'un tronçon de tube selon un deuxième mode de réalisation selon lequel le rayonnement laser est guidé dans un flux de liquide,
- la figure 3 illustre une étape d'ablation laser d'un tronçon de tube selon un troisième mode de réalisation selon lequel le rayonnement laser est dévié par un miroir en direction de la surface interne du tronçon,
- la figure 4 illustre une étape d'ablation laser d'un tronçon de tube selon un quatrième mode de réalisation selon lequel le rayonnement laser est guidé dans un flux de liquide et est dévié par un déflecteur en direction de la surface interne du tronçon
- la figure 5 illustre le principe de l'ablation laser mis en oeuvre dans le premier et le deuxième mode de réalisation de l'invention.

Des parties identiques, similaires ou équivalentes des différentes figures portent les mêmes références numériques de façon à faciliter le passage d'une figure à l'autre.

Les différentes parties représentées sur les figures ne le sont pas nécessairement selon une échelle uniforme, pour rendre les figures plus lisibles.

### EXPOSÉ DÉTAILLÉ DE MODES DE RÉALISATION PARTICULIERS

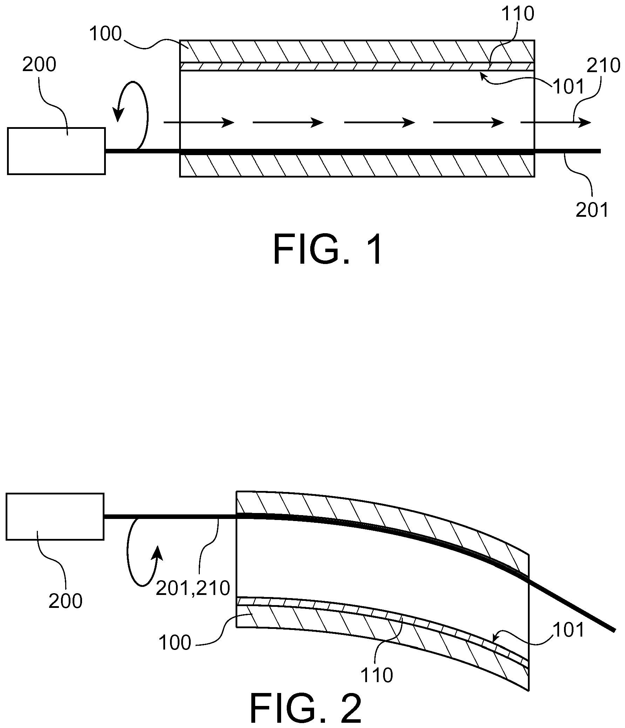

La figure 1 illustre une étape d'ablation laser de la surface interne 101 d'un tronçon 100 de tube d'un générateur vapeur.

Une telle étape d'ablation est mise en oeuvre dans le cadre d'un procédé de décontamination de tubes de générateur de vapeur qui peut être effectué, notamment dans le cadre du démantèlement d'un réacteur nucléaire.

Un tel procédé comprend les étapes suivantes :
- découpage des tubes à décontaminer en tronçons 100 de tube,
- ablation laser de la surface interne 101 d'au moins certains tronçons 100 de tube sur une épaisseur suffisante pour éliminer la partie 110 de chacun de ces tronçons 100 qui est contaminée.

L'étape d'ablation laser est préférentiellement adaptée pour ablater la surface interne de chaque tronçon 100 sur une épaisseur d'au moins 20 µm et préférentiellement d'au moins 100 µm, cette dernière épaisseur représentant la partie 110 incluant la zone contaminée et une zone non contaminée formant une marge supplémentaire de sécurité.

Dans un premier mode de réalisation, le procédé comprend l'étape d'ablation laser telle qu'illustrée sur la figure 1

Dans ce premier mode de réalisation, l'étape de découpage des tubes en tronçons 100 est adaptée aux contraintes liées à l'étape d'ablation de ce mode de réalisation. En effet, les tronçons 100, pour être compatibles avec les contraintes de l'étape d'ablation illustrée sur la figure 1, doivent être sensiblement droits.

Ainsi, dans ce premier mode de réalisation, l'étape de découpage est réalisée de manière à ce qu'une partie des tronçons 100 soit sensiblement droit, c'est-à-dire qu'une partie des tronçons 100 ne présente sensiblement pas de déviation angulaire, tel que celle qui peut résulter d'une courbure.

On entend par « déviation angulaire d'un tronçon », les tronçons 100 s'étendant selon une ligne directrice, la valeur de l'angle formée entre les tangentes de la ligne directrice au niveau des deux extrémités dudit tronçon, étant entendu que le tronçon 100, s'il présente une courbure, celle-ci est sensiblement monotone. Un tronçon 100 de tube ne présentant pas de déviation angulaire est donc un tronçon dont la valeur d'angle entre les tangentes de la ligne directrice au niveau des deux extrémités dudit tronçon 100 est nulle.

Dans cette étape de découpage, la taille des tronçons 100 est inférieure à 1 m et, préférentiellement inférieure à 50 cm voire à 25 cm. Cette valeur de taille maximum des tronçons, peut être même abaissée, afin de faciliter la manipulation des tronçons, à 15 cm, voire 10 cm ou encore 5 cm.

Selon des possibilités de l'invention, la taille des tronçons 100 peut être sensiblement constante ou peut être modulée en fonction de la courbure dudit tronçon 100. Cette deuxième possibilité est préférée. En effet, avec une telle possibilité, il est possible de découper chacun des tubes en tronçons 100 de manière à ce que les parties courbes du tube soient séparées de ses parties droites. Ceci permet, pour un procédé de décontamination qui, comme cela est le cas dans ce premier mode de réalisation, est utilisable uniquement pour décontaminer les tronçons 100 sensiblement droits, de décontaminer l'ensemble des parties droites de chacun des tubes.

Lors de l'étape de découpage, chacun des tubes est découpé en tronçons 100. Ce découpage peut être réalisée classiquement par une scie circulaire ou une meuleuse à disque ou de manière plus précise par un système de découpe par laser ou par jet d'eau.

Bien entendu, lors de l'étape de découpage des tubes en tronçons, toutes méthodes permettant de découper les tubes en tronçons avec une déformation réduite au niveau de la zone par laquelle deux tronçons consécutifs ont été séparées peut être envisagée sans que l'on sorte du cadre de l'invention.

Les tubes découpés en tronçons, les tronçons 100 droits sont sélectionnés pour être décontaminés lors de l'étape d'ablation laser. Chacun de ces tronçons 100, en étant de section droite, présente une direction longitudinale.

L'étape d'ablation laser dans ce premier mode de réalisation consiste, comme cela est illustré sur la figure 1, en la soumission du tronçon 100 de tube à un rayonnement laser 201 sensiblement parallèle à la direction longitudinale dudit tronçon 100, lors de cette soumission le rayonnement laser 201 étant déplacé relativement au tronçon 100 de manière à parcourir toute les génératrices internes du tronçon 100.

Lors de cette étape, le rayonnement laser 201 possède une longueur d'onde et une puissance appropriées pour ablater la surface interne de tubes de générateur de vapeur. Le rayonnement laser peut être du type impulsionnel ou du type continu sans que l'on sorte du cadre de l'invention. Ainsi, le rayonnement laser 201 peut être, par exemple un rayonnement obtenu par un laser 200 Nd-YAG à impulsion avec une puissance supérieure à 100 W préférentiellement à 250 W voire 1 kW. Le rayonnement laser peut également être obtenu par un laser à dioxyde de carbone ou encore un laser UV XeCI excimère.

Lors de cette étape, comme cela est illustré sur la figure 1, il est également prévu, afin d'évacuer les déchets produit par l'ablation de la surface interne des tronçons 100, une circulation de fluide 210. Le fluide 210 peut être aussi bien un gaz, tel que de l'air ou de l'azote ou un liquide tel que, de l'eau ou de l'huile.

Lors de cette étape, le fluide est préférentiellement utilisé en circuit fermé avec un système de filtre pour récupérer les déchets produit par l'ablation, ceci afin de réduire les quantités de fluide et de déchet à stocker.

On peut noter que dans le cas où le fluide est un liquide, une solution aqueuse est préférable. En effet une telle solution, lorsqu'elle est contaminée par les déchets d'ablation, peut être redirigée vers une installation de cimentation afin d'être stocker sous forme de colis.

Selon cette possibilité, afin d'améliorer le rendement de décontamination, la solution aqueuse peut être une solution acide telle qu'une solution d'acide nitrique.

Selon une alternative à ce premier mode de réalisation, il peut être prévu une étape de redressage des tronçons entre l'étape de découpage des tubes et l'étape d'ablation laser.

Une telle étape consiste à appliquer une déformation plastique des tronçons 100 afin de supprimer la courbure présentée par ces derniers et ainsi assurer que l'ensemble des tronçons 100 de tube soit compatible avec l'étape d'ablation laser. Une telle déformation plastique peut être réalisée conjointement ou postérieurement à un échauffement des tronçons. Ainsi un procédé de décontamination selon cette alternative au premier mode de réalisation, il n'est pas nécessaire de sélectionner les tronçons 100 qui sont soumis à l'étape d'ablation laser et les tubes peuvent être décontaminés dans leur intégralité.

Selon une autre alternative similaire, il est également envisageable, sans que l'on sorte du cadre de l'invention que les tubes soient soumis, préalablement à l'étape de découpage, à une étape de redressage. De cette manière, les tubes étant droits avant l'étape de découpage, la courbure de ces derniers n'est plus à prendre en compte lors de cette étape. Ainsi, selon cette alternative, les tubes sont découpés, lors de l'étape de découpage, en tronçons 100 de taille sensiblement identique.

Un tel procédé de décontamination laser est mis en oeuvre dans une installation comportant :
- un dispositif de découpage de tubes adapté pour découper les tubes de générateur de vapeur en tronçons 100,
- un dispositif de décontamination laser adapté pour ablater la surface interne de tronçons 100 de tube sur une épaisseur suffisante pour éliminer la partie de chaque tronçon 100 qui est contaminée.

Une telle installation, conformément aux deux alternatives décrites ci-dessus, peut également comporter un dispositif de redressage de tube/tronçon adapté pour redresser les tubes/ tronçons.

La figure 2 illustre une étape d'ablation laser d'un procédé de décontamination selon un deuxième mode de réalisation de l'invention. Un procédé de décontamination selon ce deuxième mode réalisation se différencie d'un procédé selon le premier mode de réalisation en ce que, lors de l'étape d'ablation laser, le rayonnement laser 201 est guidé par la circulation de fluide 210 dans les tronçons 100.

L'étape de découpage des tronçons 100 est similaire à celle du premier mode de réalisation, si ce n'est, que la taille des tronçons 100 est préférentiellement modulée afin que les tronçons 100 présentent une déviation angulaire de maximum de 15°, préférentiellement de 10°, voire 5°. De cette manière, la ligne directrice de chaque tronçon 100 présente une déviation angulaire inférieure à 15°, préférentiellement 10°, voire 5°. Il est également possible, dans ce deuxième mode de réalisation, de prévoir que le découpage des tubes en tronçons 100 soit réalisée de manière à ce que chaque tronçon 100 présente une taille sensiblement identique, seuls les tronçons 100 présentant une déviation angulaire compatible étant soumis à l'étape d'ablation laser.

Ce deuxième mode de réalisation est également compatible avec les alternatives du premier mode de réalisation dans lequel il est prévu une étape de redressage. On peut néanmoins noter que, selon ce deuxième mode de réalisation, le redressage peut être que partiel, de manière à assurer que les tronçons 100 présentent une déviation angulaire de maximum de 15°, préférentiellement de 10°, voire 5°.

L'étape d'ablation laser, telle qu'illustrée sur la figure 2 et selon ce deuxième mode de réalisation, consiste à soumettre chaque tronçon 100 au jet de fluide 210 selon une direction sensiblement tangente à la ligne directrice au niveau de l'entrée du tronçon 100 par laquelle est injecté le fluide 210, le jet de fluide 210 étant déplacé relativement au tronçon 100 de manière à parcourir toute les génératrices internes du tronçon 100. Le fluide guidant le rayonnement laser 201, selon un principe similaire à celui décrit dans le document EP 0762947, celui-ci va également parcourir la surface interne 101 du tronçon 100.

Afin de permettre un tel guidage du rayonnement laser 201 par le jet de fluide 210, ce dernier est un liquide, tel que de l'eau ou de l'huile, adapté pour autoriser le guidage du rayonnement laser 201 dans un jet formé par ce même liquide. Le jet de liquide est un jet de liquide sous pression. La pression du jet de fluide et le fluide 210 sont adaptés pour que le rayonnement laser soit guidé dans le tronçon 100 sur au moins une distance égale à la moitié de la taille maximum des tronçons 100 et préférentiellement à la totalité.

Les conditions lors d'un tel procédé peuvent être ainsi, par exemple, pour des tronçons dont la taille maximale est comprise entre 5 et 20 cm, un jet de fluide avec un diamètre compris entre 40 et 100 µm et un débit de fluide de compris entre 5 et 100 ml.min⁻¹ soit une pression de fluide de 100 à 500 bars c'est-à-dire 1.10⁷ à 5.10⁷ Pa.

Le jet de fluide 210 forme un dispositif de déviation laser adapté pour dévier le rayonnement vers la surface interne d'un tronçon 100 à décontaminer.

Lors de cette étape d'ablation laser, le rayonnement laser 201 répond aux mêmes contraintes que celles de l'étape d'ablation laser du premier mode de réalisation.

On peut noter que selon ce deuxième mode de réalisation, l'étape d'ablation laser peut être réalisée en deux passes, le tronçon 100 étant soumis au jet de fluide/ rayonnement laser par une première extrémité lors d'une première passe et par une deuxième extrémité lors d'une deuxième passe. Une telle étape d'ablation laser en deux passes permet d'assurer que les parties de chaque tronçon 100 qui ne sont pas accessibles au rayonnement laser par la première extrémité sont bien soumises à ce dernier lors de la deuxième passe.

Une installation selon ce deuxième mode de réalisation se différencie d'une installation selon le premier mode par le dispositif de décontamination laser qui est adapté pour mettre en oeuvre un rayonnement laser 201 guidé par un jet de fluide 210. Un tel dispositif comprend notamment un système d'émission laser et de génération de jet de fluide similaire à celui décrit dans le document EP 0762947.

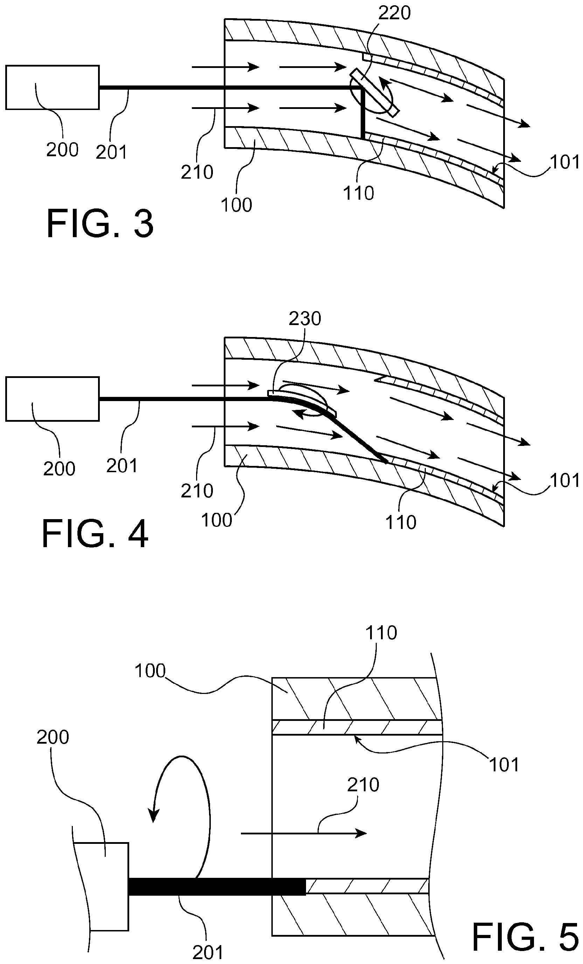

La figure 3 illustre une étape d'ablation laser d'un procédé de décontamination selon un troisième mode de réalisation. Un procédé de décontamination selon ce troisième mode de réalisation se différencie d'un procédé de décontamination selon le deuxième mode de réalisation en ce que lors de l'étape d'ablation le rayonnement laser 210 est directement dévié par un miroir 220.

Dans ce troisième mode de réalisation, l'étape de découpage des tubes en tronçons 100 est sensiblement identique à celle du deuxième mode de réalisation. Ce troisième mode de réalisation est également compatible, de manière identique au deuxième de réalisation, aux alternatives décrites dans le premier mode de réalisation selon lesquelles il peut être prévu une étape de redressage des tubes ou des tronçons 100.

En ce qui concerne l'étape d'ablation laser, la soumission de la surface interne 101 des tronçons 100 au rayonnement laser 201 n'est pas obtenue au moyen d'un guidage par le fluide 210 mais par une déviation du rayonnement laser par un miroir 220. Ainsi lors de l'étape d'ablation laser, selon ce troisième mode de réalisation, un système de miroir 220 est introduit dans le tronçon 100 selon la configuration illustrée sur la figure 3. Le rayonnement laser 201 est envoyé directement sur le miroir 220 qui dévie le rayonnement laser 201 en direction de la surface interne 101 du tronçon 100. Ainsi en déplaçant le miroir 220 le long de la surface interne 101 du tronçon 100 de manière à ce que le rayonnement balaye la surface interne 101 du tronçon 100, il est possible d'effectuer une ablation de la partie de la surface interne 101 qui est contaminée.

Dans cette étape, les contraintes vis-à-vis du laser sont sensiblement identiques à celle du laser décrit dans le premier mode de réalisation. Le miroir 220 est adapté pour dévier le rayonnement laser 201 avec une absorption de ce rayonnement laser 201 qui est réduite et qui est préférentiellement sensiblement nulle. Le miroir 220, afin de permettre un balayage de la surface interne des tronçons 100 est mobile en rotation et en translation vis-à-vis du tronçon 100 dans lequel il est introduit. Un tel montage peut être obtenu, par exemple au moyen d'un rail, non illustré.

Le miroir 220 forme un système de déviation du rayonnement laser 201 adapté pour dévier le rayonnement laser 201 issu directement du laser 200 en direction de la surface interne 101 de chaque tronçon 100.

Il est également prévu dans ce troisième mode de réalisation, de manière similaire à ce qui est décrit dans le premier mode de réalisation, une circulation de fluide 210 adaptée pour évacuer les déchets produits par l'ablation de la partie 110 contaminée de surface interne 101 des tronçons 100 pendant l'ablation.

Une installation selon ce troisième mode de réalisation se différencie d'une installation selon le deuxième mode de réalisation par le dispositif de décontamination laser est adapté pour mettre en oeuvre un rayonnement laser 201 dévié par un miroir 220.

Selon un quatrième mode de réalisation illustré sur la figure 4 et hybride du deuxième et troisième modes de réalisation, l'étape d'ablation laser peut être réalisée au moyen d'un rayonnement laser 201 guidé par un jet de fluide 210 de façon similaire à ce qui est décrit dans le deuxième mode de réalisation, ledit jet de fluide 210 étant dévié en direction de la surface interne 101 des tronçons 100 au moyen d'un déflecteur 230 du jet de fluide. Le procédé selon ce quatrième mode de réalisation se différencie d'un procédé selon le troisième mode de réalisation en ce que le rayonnement laser 201 est guidé par le jet de fluide 210 et en ce que la déviation du rayonnement laser 201 est obtenue au moyen d'un déflecteur 230 du jet de fluide 210 et non d'un miroir.

De même que pour le troisième mode de réalisation, l'étape de découpage des tubes en tronçons 100 selon ce quatrième mode de réalisation, est sensiblement identique à celle du deuxième mode de réalisation. Ce quatrième mode de réalisation est également compatible, de manière identique au deuxième et troisième modes de réalisation, aux alternatives décrites dans le premier mode de réalisation selon lesquelles il peut être prévu une étape de redressage des tubes ou des tronçons 100.

Ce quatrième mode de réalisation présente, vis-à-vis du troisième mode de réalisation, des contraintes de montage et de positionnement du déflecteur 230 qui sont sensiblement identiques à celles du miroir 220 dans le troisième mode de réalisation. De même les contraintes de génération du jet de fluide 210 et de guidage du rayonnement laser 201 par ce dernier sont identiques à celles décrites dans le deuxième mode de réalisation. Dans ces conditions, l'homme du métier étant à même, à partir des descriptions faites dans ce document des procédés de décontamination selon le deuxième et le troisième mode de réalisation de les adapter pour mettre en oeuvre un procédé selon ce quatrième mode de réalisation, ce procédé n'est, par conséquence, pas décrit plus précisément dans ce document.

On peut noter que dans ce quatrième mode de réalisation, le déflecteur 230 et le jet de fluide 210 forment ensemble un système de déviation du rayonnement laser adapté pour dévier le rayonnement laser 201 issu directement du laser 200 en direction de la surface interne 101 de chaque tronçon 100.

Dans le premier et le troisième mode de réalisation, la circulation de fluide 210 dans les tronçons 100 lors de l'étape d'ablation laser peut être omise sans que l'on sorte du cadre de l'invention. En effet, il peut être prévu, en alternative à une telle circulation de fluide 210 pendant l'étape d'ablation laser, une étape supplémentaire de lavage de la surface interne 101 des tronçons 100 afin d'évacuer, après l'ablation laser, les déchets d'ablation.

Si dans l'ensemble des modes de réalisation décrits dans ce documents, un seul laser est utilisé pour effectuer l'étape d'ablation laser, il est également envisageable, ceci sans que l'on sorte du cadre de l'invention que plusieurs lasers en parallèle soient utilisés pour effectuer l'étape d'ablation laser. Ainsi, selon une telle configuration, au moins deux, voire plus, rayonnements laser peuvent être mis en oeuvre pour réaliser l'étape d'ablation laser permettant ainsi de diviser par deux, voire plus, la durée de cette étape.

Concernant la mise en oeuvre des modes de réalisation consistant à utiliser un rayonnement laser sensiblement parallèle à la direction longitudinale du tronçon, tel que cela est le cas dans le premier mode de réalisation, ou à soumettre le tronçon à un jet de fluide guidant un rayonnement laser selon une direction sensiblement tangente à la ligne directrice au niveau de l'entrée du tronçon, tel que cela est le cas pour le deuxième mode de réalisation, le principe de l'ablation de la surface interne du tube est similaire à celui utilisé pour les modes de réalisation dans lesquelles la surface est exposée à un rayonnement sensiblement transversale comme cela est le cas dans le troisième mode de réalisation illustré sur la figure 3. En effet, dans les deux premiers modes de réalisation, le rayonnement laser, pour obtenir l'ablation le laser, est appliqué sur la tranche du tronçon, tel que cela est illustré sur la figure 1, de manière à venir ablater la surface interne. Ainsi, le rayonnement laser est appliqué sur la tranche du tronçon, tel que cela est illustré sur la figure 5, selon une direction sensiblement transversale à la surface de la tranche et permet l'ablation de manière similaire au troisième mode de réalisation dans lequel la direction du rayonnement est sensiblement transversale à la surface interne du tronçon.

La mise en oeuvre de l'ablation selon le premier et le deuxième mode de réalisation se différencie ainsi de celle du troisième mode de réalisation principalement dans le temps d'ablation entre chaque déplacement du laser. En effet, dans le premier et le deuxième mode de réalisation, le laser étant appliquer sur la tranche, il est nécessaire de réaliser l'ablation de la partie de la surface interne sur toute la longueur du tronçon de tube alors que dans le troisième mode de réalisation cette ablation n'a lieu que sur l'épaisseur de la partie contaminée de la surface interne. Cette différence de temps d'application n'a que très peu d'influence sur le temps de traitement d'un tronçon étant donné que dans le premier et le deuxième mode de réalisation il est possible de traiter une génératrice en une seule passe et qu'il est donc nécessaire, dans le deuxième mode de réalisation, de déplacer le laser sur toute la longueur du tronçon.

Ainsi le premier et le deuxième mode de réalisation ne présentent aucune difficulté particulière de mise en oeuvre vis-à-vis des procédés d'ablation utilisant un rayonnement laser sensiblement transversal à la surface interne du tronçon si ce n'est la nécessité d'une étape de test et/ou de calcul pour connaître le temps d'ablation pour obtenir l'ablation de la partie contaminée le long d'une génératrice d'un tronçon. Une telle étape de test et/ou de calcul est bien entendu à la portée de l'homme du métier.

On peut noter que dans le cadre de ces deux premiers modes de réalisation, des tailles de tronçon réduites peuvent être utilisées afin de réduire le temps passé pour l'ablation la partie contaminée le long d'une génératrice. Ainsi, pour les deux premiers modes de réalisation de l'invention, des longueurs de tronçon de l'ordre de 10 ou de 5 cm sont à préférer. Ces longueurs de tronçon sont également particulièrement avantageuses pour limiter les problématiques liées à la courbure de certaines portions des tubes à décontaminer.

## Revendications

1. Procédé de décontamination de tubes de générateur de vapeur de centrale nucléaire comprenant les étapes suivantes de :
- découpage des tubes à décontaminer en tronçons (100) de tube,
- ablation laser de la surface interne (101) d'au moins certains tronçons (100) de tube sur une épaisseur suffisante pour éliminer la partie (110) de chacun de ces tronçons (100) qui est contaminée.

2. Procédé de décontamination selon la revendication 1, dans lequel il est compris entre l'étape de découpage des tubes en tronçons (100) et l'étape d'ablation laser, une étape de redressage des tronçons (100) afin de réduire la courbure de ces derniers.

3. Procédé de décontamination selon la revendication 1 ou 2, dans lequel, pendant l'étape de découpage des tubes en tronçons (100), la taille des tronçons (100) est modulée en fonction de la courbure de la portion du tube dans laquelle est formé le tronçon (100).

4. Procédé de décontamination selon l'une quelconque des revendications précédentes, dans lequel il est prévu pendant l'étape d'ablation laser une circulation de fluide (210) dans les tronçons (100) ablatés de manière à emporter les déchets d'ablation.

5. Procédé selon l'une quelconque des revendications précédentes, dans lequel avant l'étape d'ablation laser seuls les tronçons (100) de tube sensiblement droits, ou rendu droits, sont soumis à l'étape d'ablation laser, lesdits tronçons (100) présentant une direction longitudinale et dans lequel l'étape d'ablation consiste à soumettre chaque tronçon (100) à un rayonnement laser (201) sensiblement parallèle à la direction longitudinale dudit tronçon (100), le rayonnement laser (201) étant déplacé relativement au tronçon (100) de manière à parcourir toutes les génératrices internes du tronçon (100).

6. Procédé selon les revendications 3 et 4 ou selon la revendication 4 et 5, dans lequel, pendant l'étape d'ablation laser, le fluide (210) est envoyé sous pression dans les tronçons à ablater sous la forme d'un jet de fluide et dans lequel, pendant cette même étape, le rayonnement laser est guidé par ledit jet de fluide.

7. Procédé selon la revendication 6, dans lequel chaque tronçon s'étend selon une ligne directrice, l'étape d'ablation consistant à soumettre chaque tronçon au jet de fluide selon une direction sensiblement tangente à la ligne directrice au niveau de l'entrée du tronçon (100) par laquelle est injecté le fluide, le jet de fluide étant déplacé relativement au tronçon (100) de manière à parcourir toute les génératrices internes du tronçon (100).

8. Procédé selon l'une quelconque des revendications 1 à 4, dans lequel l'étape d'ablation est réalisée au moyen d'un laser (200) extérieur aux tronçons (100) et dans lequel il est en outre prévu un système de déviation du rayonnement laser (201) adapté pour dévier le rayonnement laser (201) issu directement du laser (200) en direction de la surface interne (101) de chaque tronçon (100) de manière à balayer cette dernière.

9. Procédé selon l'une quelconque des revendications précédentes, dans lequel l'étape d'ablation est réalisée au moyen d'au moins deux rayonnements lasers en parallèle.

10. Procédé selon l'une quelconque des revendications précédentes, dans lequel l'ablation laser de la surface interne (101) est réalisée au moyen d'au moins un rayonnement laser issu directement d'un laser (200) extérieur du tronçon (100) du tube, ledit rayonnement laser étant dévié ou non par un système de déviation du rayonnement laser.

11. Installation de décontamination de tubes de générateur de vapeur comportant :
- un dispositif de découpage de tube adapté pour découper les tubes de générateur de vapeur en tronçon (100) de tube,
- un dispositif de décontamination laser adapté pour ablater la surface interne (101) de tronçons (100) de tube sur une épaisseur suffisante pour éliminer la partie (110) de chaque tronçon (100) qui est contaminée.

12. Installation de décontamination selon la revendication 11, dans laquelle le dispositif de décontamination laser est adapté pour la mise en oeuvre d'une étape d'ablation laser d'un procédé selon la revendication 8 prise en combinaison ou non avec la revendication 9 ou 10 et 9, et comporte :
- un laser (200) extérieur, c'est-à-dire un laser qui est destiné à être extérieur aux tronçons (100) de tube lors de la mise en oeuvre de l'étape d'ablation laser,
- un système de déviation laser adapté pour dévier le rayonnement (201) issu directement du laser (200) vers la surface interne (101) d'un tronçon (100) à décontaminer.

13. Installation de décontamination selon la revendication 12, dans lequel il est en outre prévu dans le dispositif de décontamination laser un système de circulation de fluide (210) adapté pour faire circuler du fluide (210) dans un tronçon (100) de tube.

## Patentansprüche

1. Verfahren zur Dekontaminierung von Kernkraftwerk-Dampferzeugerrohren, welches die folgenden Schritte umfasst:
- Schneiden der zu dekontaminierenden Rohre in Rohrabschnitte (100),
- Laserablation der Innenfläche (101) wenigstens bestimmter Rohrabschnitte (100) auf einer ausreichenden Dicke, um den kontaminierten Teil (110) jedes der Abschnitte (100) zu entfernen.

2. Verfahren zur Dekontaminierung nach Anspruch 1, wobei zwischen dem Schritt des Schneidens der Rohre in Abschnitte (100) und dem Laserablationsschritt ein Schritt des Aufrichtens der Abschnitte (100) enthalten ist, um deren Krümmung zu verringern.

3. Verfahren zur Dekontaminierung nach Anspruch 1 oder 2, wobei während des Schrittes des Schneidens der Rohre in Abschnitte (100) die Größe der Abschnitte (100) abhängig von der Krümmung des Rohrabschnitts, an dem der Abschnitt (100) gebildet ist, angepasst wird.

4. Verfahren zur Dekontaminierung nach einem der vorhergehenden Ansprüche, bei welchem während des Schrittes der Laserablation das Strömen eines Fluids (210) in den ablatierten Abschnitten (100) vorgesehen ist, um die Ablationsabfälle mitzuführen.

5. Verfahren nach einem der vorhergehenden Ansprüche, bei welchem vor dem Schritt der Laserablation nur die Abschnitte (100) von im Wesentlichen geraden Rohren oder begradigten Rohren dem Schritt der Laserablation unterworfen werden, wobei die Abschnitte (100) eine Längsrichtung aufweisen und wobei der Ablationsschritt darin besteht, jeden Abschnitt (100) einer Laserbestrahlung (201) auszusetzen, die im Wesentlichen parallel zu der Längsrichtung des Abschnitts (100) ist, wobei die Laserstrahlung (201) bezüglich des Abschnitts (100) bewegt wird, sodass sie alle inneren Generatoren des Abschnitts (100) erfasst.

6. Verfahren nach Anspruch 3 und 4 oder nach Anspruch 4 und 5, bei welchem während des Schrittes der Laserablation das Fluid (210) unter Druck in Form eines Fluidstrahls in die zu ablatierenden Abschnitte gesendet wird und bei welchem während desselben Schrittes die Laserstrahlung durch den Fluidstrahl gelenkt wird.

7. Verfahren nach Anspruch 6, bei welchem sich jeder Abschnitt entlang einer Führungslinie erstreckt, wobei der Ablationsschritt darin besteht, jeden Abschnitt dem Fluidstrahl in einer Richtung zu unterwerfen, die auf Höhe des Einlasses des Abschnitts (100), durch den das Fluid injiziert wird, im Wesentlichen tangential zu der Führungslinie ist, wobei der Fluidstrahl bezüglich des Abschnitts (100) bewegt wird, so dass er alle inneren Generatoren des Abschnitts (100) erfasst.

8. Verfahren nach einem der Ansprüche 1 bis 4, bei welchem der Ablationsschritt mittels eines Lasers (200) außerhalb der Abschnitte (100) durchgeführt wird, und bei welchem ferner ein System zur Ablenkung der Laserstrahlung (201) vorgesehen ist, welches dazu ausgelegt ist, die direkt aus dem Laser (200) stammende Laserstrahlung (201) in Richtung der Innenfläche (101) jedes Abschnitts (100) so abzulenken, dass dieser abgetastet wird.

9. Verfahren nach einem der vorhergehenden Ansprüche, bei welchem der Ablationsschritt mittels wenigstens zweier paralleler Laserstrahlen durchgeführt wird.

10. Verfahren nach einem der vorhergehenden Ansprüche, bei welchem die Laserablation der Innenfläche (101) mittels wenigstens einer Laserstrahlung durchgeführt wird, die direkt aus einem Laser (200) außerhalb des Abschnittes (100) des Rohrs stammt, wobei die Laserstrahlung durch ein Laserstrahlungsablenkungssystem abgelenkt wird oder nicht.

11. Dekontaminierungsvorrichtung für Dampferzeugungsrohre, umfassend:
- eine Rohrschneidevorrichtung, die für das Schneiden der Dampferzeugungsrohre in Rohrabschnitte (100) ausgelegt ist,
- eine Laserdekontaminierungsvorrichtung, die für eine Ablation der Innenfläche (101) der Rohrabschnitte (100) auf einer ausreichenden Dicke ausgelegt ist, um den kontaminierten Teil (110) jedes der Abschnitte (100) zu entfernen.

12. Dekontaminierungsvorrichtung nach Anspruch 11, bei welcher die Laserdekontaminierungsvorrichtung für die Durchführung eines Laserablationschrittes eines Verfahrens nach Anspruch 8 in Kombination oder nicht in Kombination mit Anspruch 9 oder 10 und 9 ausgelegt ist, und umfasst:
- einen externen Laser (200), das heißt einen Laser, der dazu bestimmt ist, sich bei der Durchführung der Laserablation außerhalb der Rohrabschnitte (100) zu befinden,
- ein Laserablenkungssystem, welches dazu ausgelegt ist, die direkt von dem Laer (200) stammende Strahlung (201) zu der Innenfläche (101) eines zu dekontaminierenden Abschnitts (100) hin zu lenken.

13. Dekontaminierungsvorrichtung nach Anspruch 12, bei welcher ferner in der Laserdekontaminierungsvorrichtung ein Flüssigkeitsströmungssystem (210) vorgesehen ist, das dazu ausgelegt ist, Fluid (210) in einem Rohrabschnitt (100) strömen zu lassen.

## Claims

1. Method of decontaminating steam generator tubes in a nuclear power plant including the following steps:
- cut tubes to be decontaminated into tube segments (100),
- laser ablation of the inside surface (101) of at least some tube segments (100) over a sufficient thickness to eliminate the contaminated part (110) of each of these segments (100).

2. Decontamination method according to claim 1, wherein between the step to cut tubes into segments (100) and the laser ablation step, there is a segment (100) straightening step so as to reduce their curvature.

3. Decontamination method according to claim 1 or 2, wherein, during the step to cut tubes into segments (100), the size of segments (100) is modulated as a function of the curvature of the portion of the tube wherein the segment (100) is formed.

4. Decontamination method according to any one of the previous claims, wherein during the laser ablation step fluid circulation (210) in the ablated segments (100) is planned so as to carry away ablation waste.

5. Method according to any one of the previous claims, wherein before the laser ablation step only the tube segments (100) that are substantially straight, or straightened, are subjected to the laser ablation step, said segments (100) having a longitudinal direction and wherein the ablation step consists of subjecting each segment (100) to laser radiation (201) substantially parallel to the longitudinal direction of said segment (100), the laser radiation (201) being moved relative to the segment (100) in such a ways as to cover all the internal longitudinal lines of the segment (100).

6. Method according to claims 3 and 4 or according to claims 4 and 5, wherein, during the laser ablation step, the fluid (210) is transferred under pressure into the segments to be ablated in the form of a fluid jet and wherein, during this step, the laser radiation is guided by said fluid jet.

7. Method according to claim 6, wherein each segment extends along a general direction, the ablation step consisting of applying the fluid jet to each segment along a direction substantially parallel to the general direction at the inlet to the segment (100) through which fluid is injected, the fluid jet being moved relative to the segment (100) in such a way as to cover all internal longitudinal lines of the segment (100).

8. Method according to any one of claims 1 to 4, wherein the ablation step is done using a laser (200) external to the segments (100) and wherein a system to deviate the laser radiation (201) is also provided, capable of deviating the laser radiation (201) output directly from the laser (200) towards the inside surface (101) of each segment (100) so as to cover this segment.

9. Method according to any one of the previous claims, wherein the ablation step is done using at least two laser radiations in parallel.

10. Method according to any one of the previous claims, wherein the laser ablation of the inside surface (101) is made using at least one laser radiation output directly from a laser (200) external to the segment (100) of the tube, said laser radiation being or not being deviated by a laser radiation deviation system.

11. Steam generator tube decontamination installation comprising:
- a tube cutting device adapted to cutting steam generator tubes into tube segments (100),
- a laser decontamination device adapted to ablate the inside surface (101) of tube segments (100) over a sufficient thickness to eliminate the contaminated part (110) of each segment (100)

12. Decontamination installation according to claim 11, wherein the laser decontamination device is designed to use a laser ablation step of a method according to claim 8 that may or may not be taken in combination with claim 9 or 10 and 9, and comprises:
- an external laser (200), in other words a laser that can be used outside tube segments (100) during use of the laser ablation step,
- a laser deviation system designed to deviate the radiation (201) output directly from the laser (200) towards the inside surface (101) of a segment (100) to be decontaminated.

13. Decontamination installation according to claim 12, wherein a fluid circulation system (210) is also provided in the laser decontamination device, adapted to circulate a fluid (210) in a tube segment (100).
